# FASCICULE DE BREVET EUROPEEN

(11) **EP 2 045 688 B1**
(45) Date de publication et mention de la délivrance du brevet: **03.03.2010**
(21) Numéro de dépôt: 08165834.6
(22) Date de dépôt: 03.10.2008
(51) Int. Cl.: G05D 23/19, G01R 31/28

(54) **Méthode de détection d'anomalie dans une installation domestique et unité de gestion d'énergie pour la mise en oeuvre de ladite méthode**
Methode zur Fehlererkennung in einer Heimanlage und Energiesteuereinheit zur Umsetzung der Methode
Method of detecting an anomaly in a household installation and power management unit for implementing said method.

(30) Priorité: 03.10.2007 FR 0706948
(43) Date de publication de la demande: 08.04.2009
(73) Titulaire: Delta Dore, 35270 Combourg (FR)
(72) Inventeur: Raffray, Patrick, 35120 HIREL (FR)
(74) Mandataire: Maillet, Alain

(56) Documents cités:
- DE-A1- 19 940 988
- FR-A- 2 727 812
- FR-A- 2 790 904
- FR-A- 2 794 926

## Description

La présente invention concerne une méthode de détection d'anomalie de fonctionnement d'une installation domestique gérée par fil pilote ainsi qu'une unité de gestion d'énergie destinée à effectuer ce test.

Le document FR 2 794 926 divulgue un procédé et un système de l'art antérieur pour la détection d'anomalie de fonctionnement d'une installation domestique.

Une installation domestique gérée par fil pilote comporte essentiellement des appareils électriques ou groupes d'appareils électriques dont la consommation électrique est susceptible d'être programmée. Il peut par exemple s'agir d'un chauffe-eau, de convecteurs ou de panneaux rayonnants.

La consommation énergétique de ces appareils ou groupes d'appareils est commandée par une unité de gestion d'énergie unique qui est reliée à chaque appareil ou groupe d'appareils par un fil appelé fil pilote. Chaque appareil est aussi connecté au réseau électrique domestique pour son alimentation électrique.

L'unité de gestion d'énergie génère des signaux de commande appelés signaux pilotes, en fonction d'une programmation qu'un utilisateur a créée, qui sont alors transmis aux appareils ou aux groupes d'appareils électriques via les fils pilotes qui les relient à l'unité de gestion d'énergie.

La programmation des appareils ou groupes d'appareils consiste à définir, via une interface homme-machine que comporte l'unité de gestion d'énergie, des groupes d'informations relatives à un appareil ou un groupe d'appareils à commander, à une plage horaire et à un mode de consommation d'énergie, par exemple {convecteurs du salon, 18h-22h, confort} ou encore, des informations relatives à une action spécifique et à un instant, par exemple {tester l'installation, 23h}. Ces informations de programmation sont mémorisées au sein de l'unité de gestion d'énergie.

Il existe différents modes de consommation d'énergie qui correspondent à autant de signaux pilotes différents. Quatre modes de consommation d'énergie sont généralement décrits, mais certains appareils ou groupes d'appareils électriques sont capables de gérer six modes de consommation d'énergie différents, voire plus.

Le premier mode de consommation d'énergie est appelé mode « confort ». Des appareils ou groupes d'appareils électriques fonctionnant en mode « confort » respectent alors une premiere température de consigne (par exemple, 20° C). Il correspond, selon un mode connu de réalisation, à un signal pilote d'amplitude nulle.

Le second mode de consommation d'énergie est appelé mode « économique » ou encore, mode « réduit ». Des appareils ou groupes d'appareils électriques fonctionnant en mode « économique » respectent une deuxième température de consigne généralement inférieure à la première température de consigne (par exemple, 16° C). Il correspond, selon un mode connu de réalisation, à un signal pilote sinusoïdal pleine alternance.

Le troisième mode de consommation d'énergie est appelé mode « hors gel ». Les appareils ou groupes d'appareils électriques fonctionnant en mode « hors gel » maintiennent des locaux non utilisés pour une durée prolongée, à une troisième température de consigne, généralement égale à 7°C environ, afin d'éviter des dégâts des eaux dus à des conduites d'eau qui auraient sinon explosé sous l'effet du gel. Il correspond, dans un mode connu de réalisation, à un signal pilote sinusoïdal dont on ne conserve que la demi alternance négative.

Le quatrième mode de consommation d'énergie correspond à l'arrêt des appareils ou groupes d'appareils électriques. Le signal pilote est alors, dans un mode connu de réalisation, un signal sinusoïdal dont on ne conserve que la demi-alternance positive.

Il arrive que, lors de la mise en place de l'installation gérée par fil pilote, ou bien lors de travaux de rénovation de cette installation et du câblage des appareils électriques ou groupes d'appareils, le fil pilote et le fil de phase d'un appareil soient par inadvertance inversés. Cette erreur mène à un disfonctionnement de l'installation et peut aussi conduire à des courts-circuits, ce qui peut la dégrader.

La présente invention permet de détecter des courts-circuits qui peuvent résulter des erreurs de câblage en effectuant un test de l'installation gérée par fil pilote. A cet effet, une méthode de détection d'anomalie de fonctionnement d'une installation gérée par fil pilote selon l'invention est mise en oeuvre dans une installation comportant un ou plusieurs appareils et/ou groupes d'appareils électriques prévus pour fonctionner soit selon un premier mode de consommation d'énergie correspondant à un signal d'amplitude nulle, soit selon un second mode de consommation d'énergie correspondant à un signal alternatif pleine alternance, et une unité de gestion d'énergie comportant, d'une part, autant de voies que d'appareils et/ou groupes d'appareils électriques, chaque voie étant connectée à un appareil ou à un groupe d'appareils électriques par un unique fil pilote et, d'autre part, une interface homme-machine comportant autant de témoins d'état de voie que de voies. Cette méthode est caractérisée en ce qu'elle consiste à :
a) commander toutes les voies de l'installation dans le premier mode de consommation d'énergie,
b) sélectionner une voie,
c) commander la voie sélectionnée dans le second mode de consommation d'énergie,
d) commander le témoin d'état de la voie sélectionnée soit dans un premier état si un disjoncteur n'a pas coupé cette voie, soit dans un second état si un disjoncteur a coupé cette voie.

Selon une autre caractéristique de l'invention, elle débute suite à une indication temporelle mémorisée par l'unité de commande. Elle peut également débuter par l'action spécifique d'un utilisateur via l'interface homme-machine.

Selon une autre caractéristique de l'invention, elle comprend une étape de commande de la voie sélectionnée dans le premier mode de consommation d'énergie lorsque ledit disjoncteur a coupé ladite voie.

La présente invention concerne également une unité de gestion d'énergie destinée à mettre en oeuvre une méthode de détection d'anomalie de fonctionnement d'une installation gérée par fil pilote comportant un ou plusieurs appareils et/ou groupes d'appareils électriques prévus pour fonctionner soit selon un premier mode de consommation d'énergie correspondant à un signal d'amplitude nulle, soit selon un second mode de consommation d'énergie correspondant à un signal sinusoïdal pleine alternance, l'unité de gestion d'énergie comportant autant de voies que d'appareils et/ou groupes d'appareils électriques, chaque voie étant connectée à un appareil ou à un groupe d'appareils électriques par un fil pilote, une interface homme-machine comportant autant de témoins d'état de voie que de voies, et au moins un disjoncteur.

Ladite unité de gestion d'énergie est caractérisée en ce qu'elle comporte une unité de commande prévue pour commander chaque voie de l'installation soit dans le premier mode de consommation d'énergie, soit dans le second mode de consommation d'énergie, l'unité de commande étant aussi prévue pour commander le témoin d'état de chaque voie soit dans un premier état si le disjoncteur n'a pas coupé ladite voie, soit dans un second état si le disjoncteur a coupé ladite voie.

Selon une autre caractéristique de l'invention, elle comporte, d'une part, un programmateur comportant l'interface homme-machine, l'unité de commande, et d'autre part, une unité d'exécution comportant une unité de commande, une ou plusieurs voies, et au moins un disjoncteur, le programmateur et l'unité d'exécution communiquant au moyen d'un bus de communication bidirectionnelle.

Selon une autre caractéristique de l'invention, ladite unité de gestion d'énergie comporte plus d'une voie et une unité de sélection de voie.

Selon une autre caractéristique de l'invention, elle comporte un unique disjoncteur situé en amont de toutes les voies de l'unité de gestion d'énergie.

Selon une autre caractéristique de l'invention, chaque voie comporte un disjoncteur.

Selon une autre caractéristique de l'invention, chaque disjoncteur est un disjoncteur à réarmement automatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 représente un exemple d'installation domestique gérée par fil pilote.
La Fig. 2 représente un convecteur géré par fil pilote.
La Fig. 3 représente une unité de gestion d'énergie selon l'invention, comportant une seule voie.
La Fig. 4 représente une unité de gestion d'énergie comportant une pluralité de voies selon un premier mode de réalisation de la présente invention.
La Fig. 5 représente une unité de gestion d'énergie comportant une pluralité de voies, selon un second mode de réalisation de la présente invention,
La Fig. 6 représente un schéma bloc des différentes étapes de la méthode de détection d'anomalie de fonctionnement d'une installation selon l'invention.

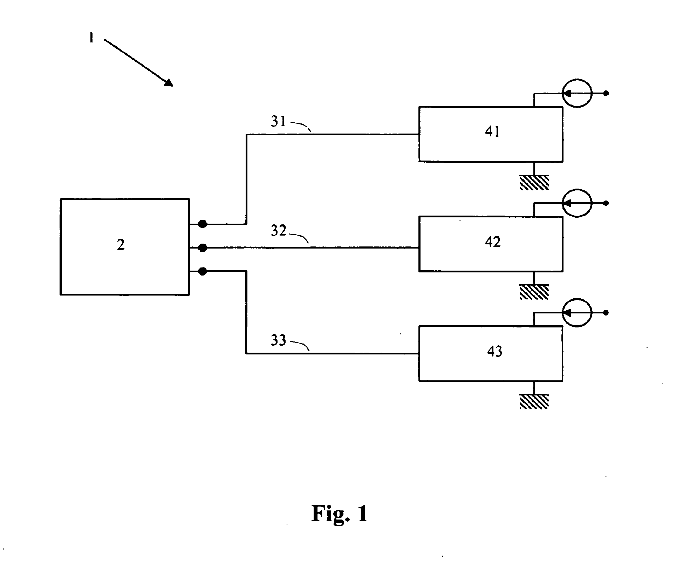

L'installation domestique 1 gérée par fil pilote représentée à la Fig. 1 comprend une unité de gestion d'énergie 2 dont chaque sortie, appelée sortie fil pilote, est reliée à l'entrée de commande d'un appareil ou d'un groupe d'appareils électriques 41, 42, 43 par un unique fil, appelé fil pilote 31, 32, 33. Chaque appareil est alimenté par le réseau électrique domestique. Cette installation 1 est destinée à gérer la consommation énergétique des différents appareils ou groupes d'appareils électriques 41, 42, 43 en fonction d'une programmation établie par un utilisateur via l'unité de gestion d'énergie 2. Ces appareils ou groupes d'appareils électriques 41, 42, 43 peuvent être par exemple, des convecteurs de chaleur, des panneaux rayonnants, des chauffe-eau ou tout autre appareil domestique ou non, dont la consommation énergétique est susceptible d'être programmée.

L'unité de gestion d'énergie 2 génère des signaux de commande, appelés signaux pilotes, qui portent l'information de consommation d'énergie destinée aux appareils ou groupes d'appareils électriques 41, 42, 43 de l'installation 1. Ce sont les différents fils pilotes 31, 32, 33 qui portent les différents signaux pilotes aux différents appareils ou groupes d'appareils électriques 41, 42, 43.

Il existe différents modes de consommation d'énergie qui correspondent à autant de signaux pilotes différents. Quatre modes de consommation d'énergie sont généralement décrits, mais certains appareils ou groupes d'appareils électriques sont capables de gérer six modes de consommation d'énergie différents voire plus.

Ces quatre modes de consommation d'énergie ont déjà été décrits dans le préambule de la présente description et l'on pourra s'y reporter. Un de ces modes, en l'occurrence le mode "confort", correspond à un signal pilote d'amplitude nulle alors qu'un autre de ces modes, en l'occurrence le mode "économique", correspond à un signal pilote pleine alternance.

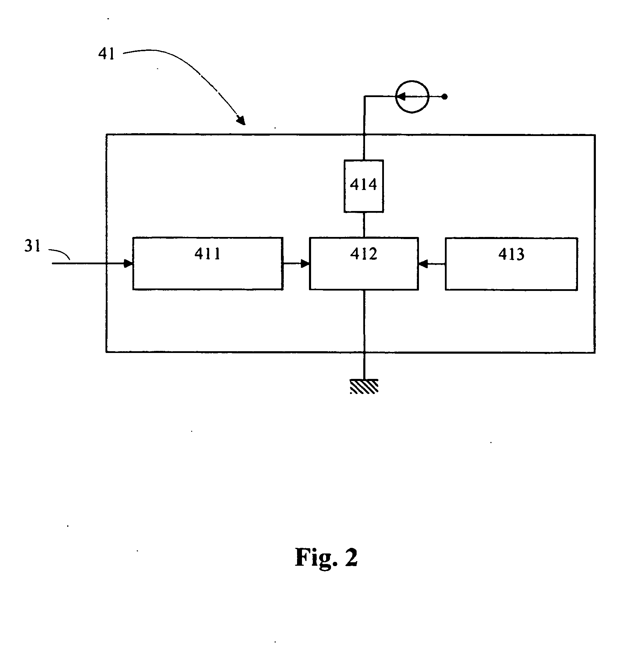

Lorsqu'un signal pilote est délivré par l'intermédiaire du fil pilote 31, par exemple à un convecteur, tel que le convecteur 41 représenté à la Fig. 2, il est fourni à une unité d'interprétation 411. Cette unité d'interprétation 411 ainsi qu'un capteur de température 413 sont reliés à un thermostat 412. Ce thermostat 412 est lui-même relié à une résistance chauffante 414 de manière à assurer son alimentation au réseau électrique domestique.

L'unité d'interprétation 411 décode à partir du signal pilote 31 le mode de consommation d'énergie à utiliser et donc la température de consigne destinée au thermostat 412. Le capteur de température 413 permet de mesurer en continu, la température de la pièce dans laquelle se trouve le convecteur 41. Cette donnée est transmise au thermostat 412 qui autorise la circulation du courant dans la résistance chauffante 414 lorsque la température mesurée dans la pièce est inférieure à la température de consigne et qui l'interrompt lorsque la température mesurée dans la pièce est supérieure à la température de consigne.

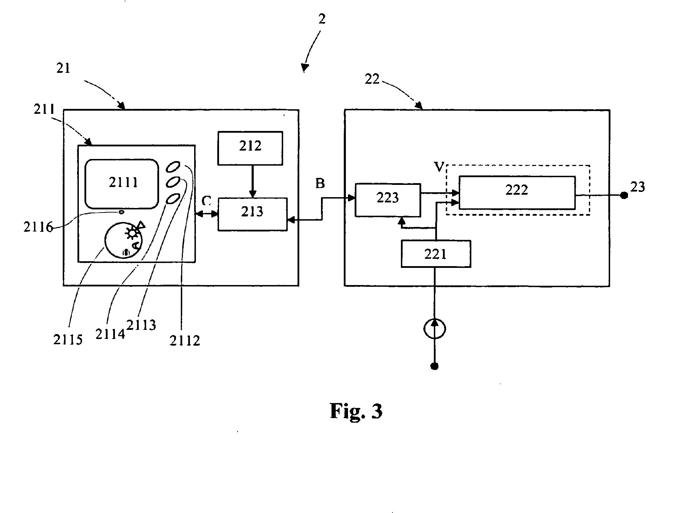

La Fig. 3 représente une unité de gestion d'énergie 2 à une voie V, c'est-à-dire comportant une seule sortie fil pilote 23, un fil pilote étant destiné à être connecté à cette sortie 23. Cette unité de gestion d'énergie 2 comprend un programmateur 21 et une unité d'exécution 22 qui sont reliés entre eux par un bus de communication bidirectionnelle B. Le programmateur 21 comporte une interface homme-machine 211, une horloge 212 et une unité de commande 213. L'interface homme-machine 211 est reliée à l'unité de commande 213 par un canal bidirectionnel C. La sortie de l'horloge 212 est connectée à une entrée de l'unité de commande 213. La sortie de l'unité de commande 213 est reliée au bus de communication bidirectionnelle B.

L'unité d'exécution 22 comporte un disjoncteur 221, une unité de commande 223, et une voie V comportant une unité de génération de signaux pilotes 222. L'unité de commande 223 de l'unité d'exécution 22 comporte deux entrées et une sortie. Le bus de communication bidirectionnelle B constitue une entrée de cette unité de commande 223. La sortie de l'unité de commande 223 est reliée à une entrée, dite première entrée, de l'unité de génération de signaux pilote 222 dont l'autre entrée, dite seconde entrée, est reliée à la sortie du disjoncteur 221, elle-même reliée à la seconde entrée de l'unité de commande 223 de l'unité d'exécution 22. L'entrée du disjoncteur 221 est reliée à la phase du réseau électrique domestique. L'unité de génération de signaux pilotes 222 comporte une sortie qui constitue la sortie fil pilote 23 de l'unité de gestion d'énergie 2.

L'interface homme-machine 211 du programmateur comporte par exemple, différents boutons 2112, 2113, 2114, un sélecteur de modes de consommation d'énergie 2115, un écran 2111 et un témoin d'état de la voie 2116.

L'interface homme-machine 211 est destinée à recevoir des informations de l'utilisateur afin de générer et mémoriser au sein de l'unité de commande 213, un programme de consommation d'énergie. Elle est de plus, destinée à fournir des informations à l'utilisateur. En effet, le témoin d'état 2116 de la voie V de l'interface homme-machine 211 caractérise l'état de cette voie V, c'est-à-dire ouvert ou fermé. Par exemple, si le témoin d'état 2116 de la voie V est une LED, elle peut être dans un premier état vert ou éteint, et correspondre au fait que la voie V est fermée, et elle peut être dans un second état rouge ou allumé, et correspondre au fait que la voie V est ouverte. Si le témoin d'état 2116 de la voie V est un élément de l'écran 2111, il peut être dans un premier état invisible et dans un second état en surbrillance.

L'horloge 212 fournit à l'unité de commande 213 des indications temporelles qui lui permettent de générer, à des instants programmés, une commande destinée à l'unité de commande 223 de l'unité d'exécution 22. Celle-ci délivre ensuite cette commande sur la première entrée de l'unité de génération de signaux pilotes 222 qui traite le signal sinusoïdal présent sur sa seconde entrée afin de générer un signal pilote correspondant au mode de consommation d'énergie programmé pour la plage horaire considérée. Le signal pilote généré est ensuite délivré sur la sortie fil pilote 23 de l'unité de gestion d'énergie 2.

Le disjoncteur 221 permet de couper la voie lorsque le courant qui y circule devient trop important, c'est-à-dire lorsque l'intensité de ce courant est supérieure à un seuil. Il est de préférence à réarmement automatique.

La présente invention concerne une méthode de détection d'anomalie de fonctionnement de l'installation 1 susceptible d'être effectuée à la mise en service de cette installation 1, après rénovation ou encore de façon régulière, par exemple par programmation de l'unité de gestion d'énergie.

La première étape de la méthode consiste à commander la voie de telle manière que l'unité de génération de signaux pilotes 222 génère et délivre un signal sinusoïdal pleine alternance sur la sortie fil pilote 23. Le signal pilote est en l'occurrence en mode « économique ».

Si le courant qui circule dans la voie reste faible, c'est-à-dire inférieur au seuil, le disjoncteur 221 ne coupe pas la voie et le signal pilote est délivré à la sortie fil pilote 23 de l'unité de gestion d'énergie 2. L'unité de commande 223 détecte sur la sortie du disjoncteur 221 et engendre une information de non-coupure qui est alors transmise via le bus de communication bidirectionnelle B à l'unité de commande 213, commandant alors le témoin d'état de la voie 2116 dans un premier état.

Si, au contraire, le courant qui circule dans la voie devient trop important, c'est-à-dire supérieur au seuil, le disjoncteur 221 s'ouvre et coupe la voie. L'unité de commande 223 ne détecte plus de signal sur la sortie de disjoncteur 221 et engendre alors une information de coupure qui est alors transmise à l'unité de commande 213 via le bus de communication bidirectionnelle B. La voie bascule alors, sous l'action de l'unité de commande 213, puis de l'unité de commande 223 de l'unité d'exécution 22, dans le mode pour lequel le signal pilote est un signal d'amplitude nulle, en l'occurrence le mode « confort ». Le fait que la voie soit coupée permet d'éviter que le disjoncteur 221 n'entre dans un cycle armé/désarmé qui, à terme, le détériorerait.

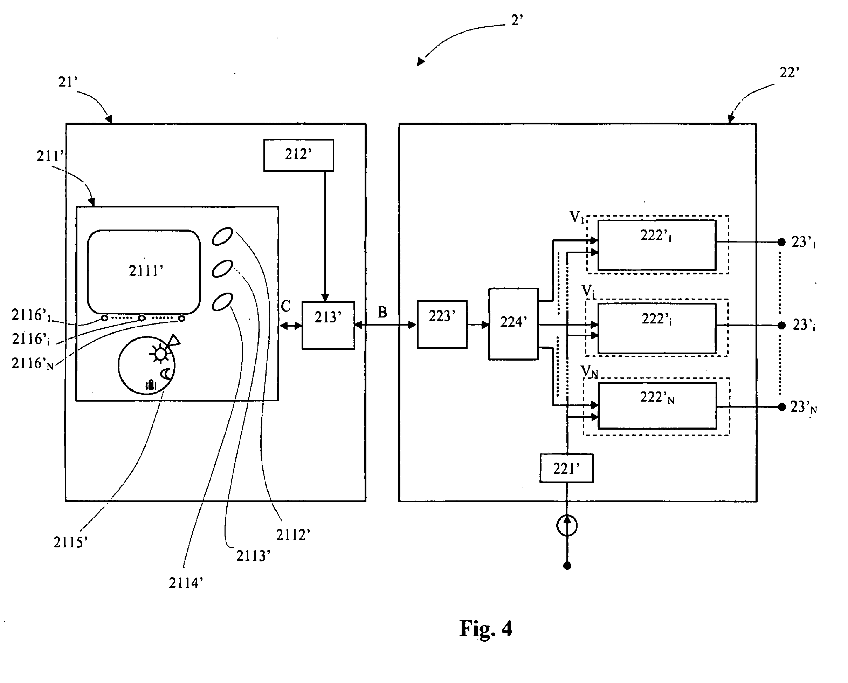

La Fig. 4 représente une unité de gestion d'énergie 2' selon un premier mode de réalisation et comportant plusieurs sorties fil pilote 23'ᵢ, avec i = 1 à N, chaque sortie 23'ᵢ étant destinée à être connectée à un fil pilote. Cette unité de gestion d'énergie 2' comprend un programmateur 21'et une unité d'exécution 22' qui sont reliés entre eux par un bus de communication bidirectionnelle B.

Le programmateur 21' comporte une interface homme-machine 211', une horloge 212' et une unité de commande 213'. L'interface homme-machine 211' est reliée à l'unité de commande 213' par un canal bidirectionnel C. La sortie de l'horloge 212' est connectée à une entrée de l'unité de commande 213' dont la sortie est reliée au bus de communication bidirectionnelle B.

L'unité d'exécution 22' comporte un disjoncteur 221', une unité de commande 223' comportant une pluralité d'entrées et une sortie, autant de voies Vᵢ, i = 1 à N, que de sorties fil pilote 23'ᵢ, une unité de sélection de voies 224' comportant une unique entrée et autant de sorties que de voies Vᵢ, chaque voie Vᵢ comportant une unité de génération de signaux pilotes 222'ᵢ.

Une entrée de l'unité de commande 223' est reliée au bus de communication bidirectionnelle B, une autre entrée à la sortie du disjoncteur 221' et sa sortie à l'entrée de l'unité de sélection des voies Vᵢ.

Chaque unité de génération de signaux pilotes 222'ᵢ comporte une sortie et deux entrées. La sortie de chaque unité de génération de signaux pilotes 222'ᵢ est une sortie fil pilote 23'ᵢ de l'unité de gestion d'énergie 2'. Une entrée, dite première entrée, est reliée à une des sorties de l'unité de sélection de voie 224', et l'autre entrée, dite seconde entrée, est reliée à la sortie du disjoncteur 221' dont l'entrée est reliée à la phase du réseau électrique domestique. On dit alors que le disjoncteur 221' est placé en amont des voies Vᵢ.

La sortie du disjoncteur 221' est reliée à une entrée de l'unité de commande 223' de l'unité d'exécution 22' de manière à permettre de détecter ou non une coupure et de transmettre ainsi une information de coupure ou de non-coupure.

L'interface homme-machine 211' du programmateur comporte, par exemple, différents boutons 2112', 2113', 2114', un sélecteur de modes de consommation d'énergie 2115', un écran 2111' et autant de témoins d'état de voie 2116'_{i,}, i = 1 à N, que de voies Vᵢ présentes dans l'unité d'exécution 22'.

L'interface homme-machine 211' est destinée à recevoir des informations de l'utilisateur afin de générer et mémoriser au sein de l'unité de commande 213', un programme de consommation d'énergie. Elle est de plus, destinée à fournir des informations à l'utilisateur. En effet, les témoins d'état de voie 2116'ᵢ de l'interface homme-machine 211' caractérisent l'état des voies, c'est-à-dire ouvert ou fermé. Par exemple, si les témoins d'état de voie 2116'ᵢ sont des LED, elles peuvent être à l'état 1, verte ou éteinte et correspondre au fait que les voies sont fermées, et elles peuvent être à l'état 2, rouge ou allumée et correspondre au fait que les voies sont ouvertes. Si les témoins d'état de voie 2116'ᵢ sont des éléments de l'écran 2111', ils peuvent être à l'état 1 invisible et à l'état 2 en surbrillance.

L'horloge 212' fournit à l'unité de commande 213' des indications temporelles qui lui permettent de générer à des instants programmés, des commandes destinées aux unités de génération de signaux pilotes 222'ᵢ. L'unité de commande 213' délivre à l'unité de sélection des voies 224', via l'unité de commande 223' de l'unité d'exécution 22', des couples d'informations : une information, dite première information, relative à la voie et une information, dite seconde information, relative au mode de consommation d'énergie qui lui est destiné, ce qui donne par exemple : (V₁, économique), (V₂, confort) ... (V_{N}, économique). Ceci permet à l'unité de sélection des voies 224' de sélectionner une voie Vᵢ au moyen de la première information puis de transmettre la commande qui est destinée à l'unité de génération de signaux pilotes 222'ᵢ de cette voie au moyen de la seconde information.

L'unité de génération de signaux pilotes 222'ᵢ de la voie Vᵢ transforme le signal sinusoïdal présent sur sa première entrée afin de générer un signal pilote correspondant au mode de consommation d'énergie programmé pour la plage horaire considérée.

Dans ce mode de réalisation, à l'instar du mode de réalisation de la Fig. 3, une information de coupure ou de non-coupure est générée par l'unité de commande 223' et transmise par le bus B à l'unité de commande 213 sur la base du signal de sortie délivré par le disjoncteur 221.

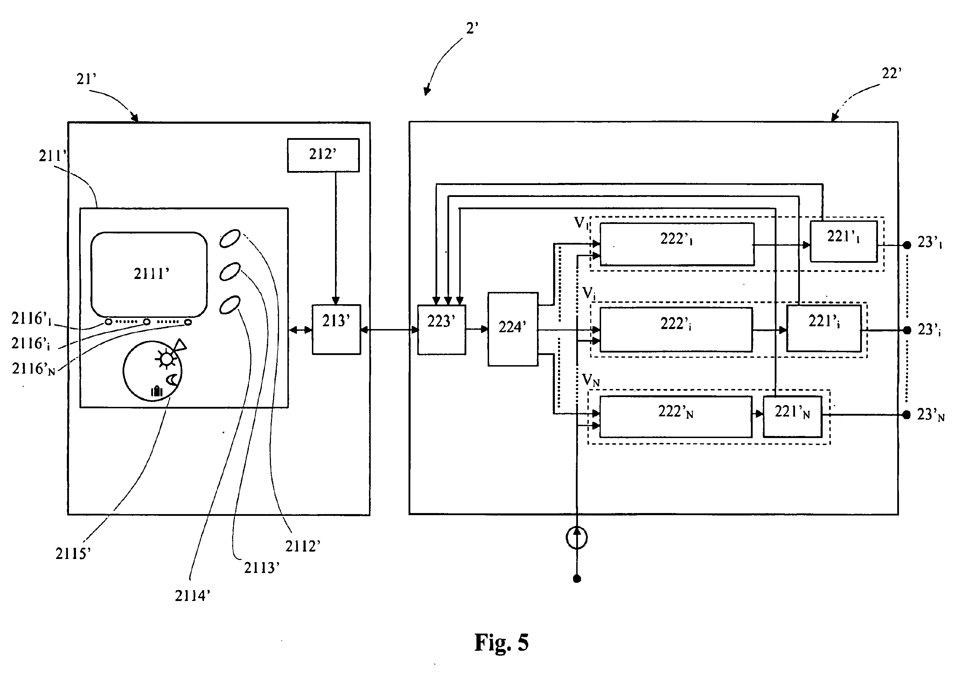

La Fig. 5 représente une unité de gestion d'énergie 2' comprenant une pluralité de voies Vᵢ, i = 1 à N, selon un second mode de réalisation.

Selon ce mode de réalisation, chaque voie Vᵢ comporte à la fois une unité de génération de signaux pilotes 222'ᵢ et un disjoncteur 221'ᵢ. Dans ce mode de réalisation, une information de coupure ou de non-coupure est générée par l'unité de commande 223' et transmise par le bus B à l'unité de commande 213 sur la base du signal de sortie délivré par le disjoncteur 22l'ᵢ de la voie Vᵢ sélectionnée par l'unité de sélection 224'.

Selon une variante de ce mode de réalisation, chaque voie Vᵢ comporte à la fois un disjoncteur 221'ᵢ et une unité de génération de signaux pilotes 222'ᵢ, un disjoncteur supplémentaire 221' se situant en plus en amont de toutes les voies Vᵢ de l'unité d'exécution 22'. Dans ce mode de réalisation, une information de coupure ou de non-coupure est générée par l'unité de commande 223' et transmise par le bus B à l'unité de commande 213 soit sur la base du signal de sortie délivré par le disjoncteur 221'ᵢ de la voie Vᵢ sélectionnée par l'unité de sélection 224', soit sur la base du signal de sortie délivré par le disjoncteur 221'.

L'unité de gestion d'énergie 2' selon ces trois derniers modes de réalisation permet de mettre en oeuvre une méthode de détection d'anomalie de fonctionnement de l'installation domestique 1 selon la présente invention.

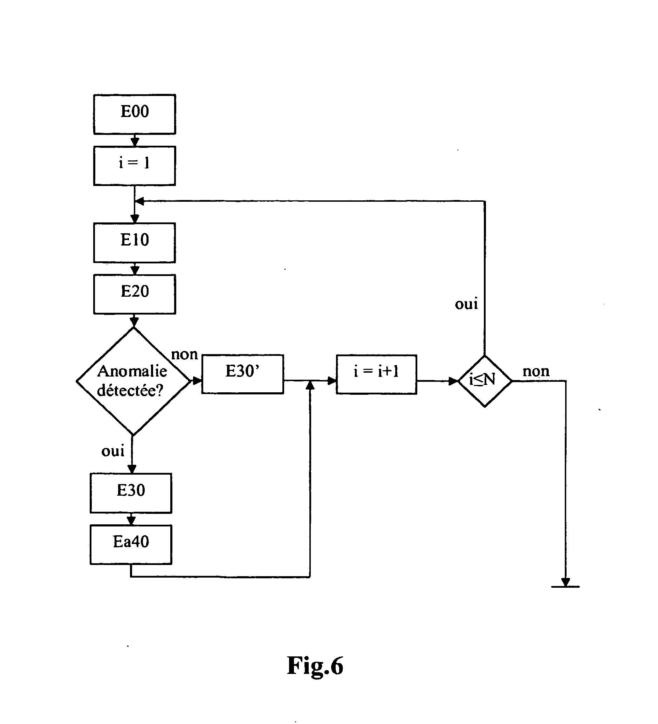

La Fig. 6 est un diagramme montrant décrit les étapes de mise en oeuvre de cette méthode de détection d'anomalie.

L'étape E00 consiste à initialiser toutes les commandes des voies Vᵢ de l'installation 1 dans un mode où le signal pilote est un signal d'amplitude nulle, en l'occurrence dans le mode « confort », par exemple en appuyant sur le bouton 214' de l'interface homme-machine 21'.

Il s'agit alors de tester chaque voie Vᵢ de l'installation.

L'étape E10 consiste à sélectionner la voie Vᵢ à tester. Cette sélection peut être soit automatique, par exemple séquentiellement de la voie V₁ à la voie V_{N}, soit manuelle, par exemple par entrée au moyen de l'interface homme-machine 211', de la voie Vᵢ à tester.

L'étape E20 consiste à commander la voie sélectionnée Vᵢ dans le mode où le signal pilote est un signal pleine alternance, en l'occurrence le mode « économique ».

Si aucune anomalie n'est détectée, c'est-à-dire, si le disjoncteur 221 (cas du mode de réalisation décrit en relation avec la Fig. 3) ou si le disjoncteur 221' (cas du mode de réalisation décrit en relation avec la Fig. 4), ou si le disjoncteur 221'ᵢ de la voie Vᵢ à tester, n'a pas coupé la voie Vᵢ, l'étape suivante E30' consiste à commander le témoin d'indication d'état 2116'ᵢ de la voie Vᵢ à l'état 1. Pour ce faire, l'information de non-coupure est transmise de l'unité de commande 223 ou 223' de l'unité d'exécution 22' à l'unité de commande 213' du programmateur 21' et delà, à l'interface homme-machine 211.

Sinon, si une anomalie est détectée, c'est-à-dire si le disjoncteur 221, 221', 221'ᵢ a coupé la voie Vᵢ, sont mises en oeuvre l'étape suivante E30 qui consiste à commander le témoin d'état 2116'ᵢ de la voie Vᵢ à l'état 2, puis l'étape E40 qui consiste à commander la voie Vᵢ dans un mode où le signal pilote est un signal d'amplitude nulle, en l'occurrence le mode « confort », évitant que le disjoncteur concerné n'entre dans un cycle armé/désarmé qui peut, à terme, le détériorer.

Dans le cas où la sélection de voie est faite automatiquement, la voie suivante Vᵢ₊₁ est ensuite testée en itérant les étapes décrites ci-dessus à partir de l'étape E10, et ce jusqu'à avoir testé toutes les voies Vᵢ de l'installation. Dans le cas où la sélection est manuelle, il peut être mis fin à la procédure ou une sélection (étape E10) est de nouveau mise en oeuvre.

Les témoins d'état de voie à l'état 2 indiquent alors les voies en défaut. Il est donc possible pour l'utilisateur de réparer ces voies puis de tester à nouveau l'installation 1 afin d'en supprimer tous les défauts.

Avantageusement, la méthode de détection d'anomalie de fonctionnement d'une installation gérée par fil pilote est caractérisée en ce qu'elle débute suite à une indication temporelle mémorisée par l'unité de commande.

Avantageusement, la méthode de détection d'anomalie de fonctionnement d'une installation gérée par fil pilote est caractérisée en ce qu'elle débute par une action spécifique d'un utilisateur via l'interface homme-machine.

## Revendications

1. Méthode de détection d'anomalie de fonctionnement d'une installation (1) gérée par fil pilote (31, 32 , 33) comportant un ou plusieurs appareils et/ou groupes d'appareils électriques (41, 42, 43) prévus pour fonctionner soit selon un premier mode de consommation d'énergie correspondant à un signal d'amplitude nulle, soit selon un second mode de consommation d'énergie correspondant à un signal alternatif pleine alternance, et une unité de gestion d'énergie (2, 2') comportant, d'une part, autant de voies (Vᵢ) que d'appareils et/ou groupes d'appareils électriques (41, 42, 43), chaque voie (Vᵢ) étant connectée à un appareil ou à un groupe d'appareils électriques (41, 42, 43) par un unique fil pilote et, d'autre part, une interface homme-machine comportant autant de témoins d'état de voie (2116, 2116'ᵢ) que de voies (Vᵢ), **caractérisée en ce qu'**elle consiste à :
a) commander toutes les voies de l'installation dans le premier mode de consommation d'énergie (E00),
b) sélectionner une voie (E10),
c) commander la voie sélectionnée dans le second mode de consommation d'énergie (E20),
d) commander le témoin d'état de la voie sélectionnée soit dans un premier état si un disjoncteur n'a pas coupé cette voie (E30'), soit dans un second état si un disjoncteur a coupé cette voie (E30).

2. Méthode de détection d'anomalie de fonctionnement d'une installation gérée par fil pilote selon la revendication 1, **caractérisée en ce qu'**elle débute suite à une indication temporelle mémorisée par l'unité de commande (213, 213').

3. Méthode de détection d'anomalie de fonctionnement d'une installation gérée par fil pilote selon la revendication 1, **caractérisée en ce qu'**elle débute par l'action spécifique d'un utilisateur via l'interface homme-machine (211, 211').

4. Méthode de détection d'anomalie de fonctionnement selon une des revendications précédentes, **caractérisée en ce qu'**elle comprend une étape de commande de la voie sélectionnée dans le premier mode de consommation d'énergie (E40) lorsque ledit disjoncteur a coupé ladite voie (E30).

5. Unité de gestion d'énergie (2, 2') destinée à mettre en oeuvre une méthode de détection d'anomalie de fonctionnement d'une installation (1) gérée par fil pilote (31, 32, 33) comportant un ou plusieurs appareils et/ou groupes d'appareils électriques (41, 42, 43 prévus pour fonctionner soit selon un premier mode de consommation d'énergie correspondant à un signal d'amplitude nulle, soit selon un second mode de consommation d'énergie correspondant à un signal sinusoidal pleine alternance, l'unité de gestion d'énergie (2, 2') comportant autant de voies (Vᵢ) que d'appareils et/ou groupes d'appareils électriques (41, 42, 43), chaque voie (Vᵢ) étant connectée à un appareil ou à un groupe d'appareils électriques (41, 42, 43) par un fil pilote, une interface homme-machine comportant autant de témoins d'état de voie (216, 216ᵢ) que de voies (Vᵢ), et au moins un disjoncteur, l'unité de gestion d'énergie (2, 2') étant
**caractérisée en ce qu'**elle comporte une unité de commande (23, 23') prévue pour commander chaque voie de l'installation soit dans le premier mode de consommation d'énergie, soit dans le second mode de consommation d'énergie, l'unité de commande (23, 23') étant aussi prévue pour commander le témoin d'état de chaque voie soit dans un premier état si le disjoncteur n'a pas coupé ladite voie, soit dans un second état si le disjoncteur a coupé ladite voie.

6. Unité de gestion de l'énergie selon la revendication 5, **caractérisée en ce qu'**elle comporte, d'une part, un programmateur comportant l'interface homme-machine (211, 211'), l'unité de commande (213, 213'), et d'autre part, une unité d'exécution (22, 22') comportant une unité de commande (223, 223'), une ou plusieurs voies (Vᵢ), et au moins un disjoncteur (221, 221'), le programmateur et l'unité d'exécution communiquant au moyen d'un bus de communication bidirectionnelle (B).

7. Unité de gestion d'énergie (2, 2') selon la revendication 5 ou 6, **caractérisée en ce que** ladite unité de gestion d'énergie comporte plus d'une voie et une unité de sélection de voie (224').

8. Unité de gestion de l'énergie (2, 2') selon l'une des revendications 5 à 7, **caractérisée en ce qu'**elle comporte un unique disjoncteur (221, 221') situé en amont de toutes les voies de l'unité de gestion d'énergie.

9. Unité de gestion de l'énergie selon l'une des revendications 5 à 7, **caractérisée en ce que** chaque voie comporte un disjoncteur (221'ᵢ).

10. Unité de gestion de l'énergie (2, 2') selon la revendication 8 ou 9, **caractérisée en ce que** chaque disjoncteur (221, 221', 221'ᵢ) est un disjoncteur à réarmement automatique.

## Claims

1. Method of detecting an anomaly in the functioning of an installation (1) managed by a pilot wire (31, 32, 33) comprising one or more electrical apparatus and/or sets of electrical apparatus (41, 42, 43) intended to function either in a first energy consumption mode corresponding to a zero amplitude signal, or in a second energy consumption mode corresponding to a full-wave alternating signal, and a power management unit (2, 2') comprising on the one hand as many channels (Vᵢ) as there are electrical apparatus and/or sets of electrical apparatus (41, 42, 43), each channel (Vᵢ) being connected to an electrical apparatus and/or set of electrical apparatus (41, 42, 43) by a single pilot wire and, on the other hand, a man-machine interface comprising as many indicators of the state of the channels (2116, 2116'ᵢ) as there are channels (Vᵢ), **characterised in that** it comprises
a) controlling all the channels of the installation in the first energy consumption mode (E00),
b) selecting a channel (E10),
c) controlling the channel selected in the second energy consumption mode (E20),
d) controlling the indicator of the state of the channel selected, either in a first state if a circuit-breaker has not cut off this channel (E30'), or in a second state if a circuit-breaker has cut off this channel (E30).

2. Method of detecting an anomaly in the functioning of an installation managed by a pilot wire according to claim 1, **characterised in that** it starts up following a time indication stored by the control unit (213, 213').

3. Method of detecting an anomaly in the functioning of an installation managed by a pilot wire according to claim 1, **characterised in that** it starts up as a result of the specific action of a user via the man-machine interface (211, 211').

4. Method of detecting an anomaly in functioning according to one of the preceding claims, **characterised in that** it comprises a step of controlling the channel selected in the first energy consumption mode (E40) when the said circuit-breaker has cut off the said channel (E30).

5. Power management unit (2, 2') adapted to implement a method of detecting an anomaly in the functioning of an installation (1) managed by a pilot wire (31, 32, 33) comprising one or more electrical apparatus and/or sets of electrical apparatus (41, 42, 43) intended to function either in a first energy consumption mode corresponding to a zero amplitude signal, or in a second energy consumption mode corresponding to a full-wave sinusoidal signal, the power management unit (2, 2') comprising as many channels (Vᵢ) as there are electrical apparatus and/or sets of electrical apparatus (41, 42, 43), each channel (Vᵢ) being connected to an electrical apparatus or to a set of electrical apparatus (41, 42, 43) by a pilot wire, a man-machine interface comprising as many indicators of the state of the channels (216, 216ᵢ) as there are channels (Vᵢ), and at least one circuit-breaker, the power management unit (2, 2') being **characterised in that** it comprises a control unit (23, 23') intended to control each channel of the installation either in the first energy consumption mode or in the second energy consumption mode, the control unit (23, 23') also being intended to control the indicator of the state of each channel, either in a first state if a circuit-breaker has not cut off this channel, or in a second state if a circuit-breaker has cut off this channel.

6. Power management unit according to claim 5, **characterised in that** it comprises, on the one hand, a programmer comprising the man-machine interface (211, 211'), the control unit (213, 213') and, on the other hand, an executing unit (22, 22') comprising a control unit (223, 223'), one or more channels (Vᵢ), and at least one circuit-breaker (221, 221'), the programmer and the executing unit communicating by means of a two-directional communication bus (B).

7. Power management unit (2, 2') according to claim 5 or 6, **characterised in that** the said power management unit comprises more than one channel and one channel selecting unit (224').

8. Power management unit (2, 2') according to one of claims 5 to 7, **characterised in that** it comprises a single circuit-breaker (221, 221') located upstream of all the channels of the power management unit.

9. Power management unit according to one of claims 5 to 7, **characterised in that** each channel comprises a circuit-breaker (221'ᵢ).

10. Power management unit (2, 2') according to claim 8 or 9, **characterised in that** each circuit-breaker (221, 221', 221'ᵢ) is an automatically resetting circuit-breaker.

## Patentansprüche

1. Verfahren zur Ermittlung einer Funktionsstörung einer Anlage (1), die von einer Steuerleitung (31, 32, 33) gesteuert wird, umfassend ein oder mehrere elektrische Geräte und/oder Gruppen elektrischer Geräte (41, 42, 43), die gemäß einem ersten Energieverbrauchsmodus entsprechend einem Amplitudensignal null oder gemäß einem zweiten Energieverbrauchsmodus entsprechend einem Vollwellensignal arbeiten sollen, und eine Energiesteuereinheit (2, 2'), die ebenso viele Pfade (Vᵢ) wie elektrische Geräte und/oder Gruppen elektrischer Geräte (41, 42, 43), von denen jeder Pfad (Vᵢ) an ein elektrisches Gerät oder eine Gruppe elektrischer Geräte (41, 42, 43) durch eine einzige Steuerleitung angeschlossen ist, sowie eine Mensch-Maschine-Interface mit ebenso vielen Pfadzustandsprüfeinrichtungen (2116, 2116'ᵢ) wie Pfaden (Vᵢ) aufweist,
**gekennzeichnet durch** folgende Schritte:
a) Steuern aller Pfade der Anlage in einem ersten Energieverbrauchsmodus (E00),
b) Auswählen eines Pfads (E10),
c) Steuern des ausgewählten Pfads im zweiten Energieverbrauchsmodus (E20),
d) Steuern der Zustandsprüfeinrichtung des ausgewählten Pfads in einem ersten Zustand, wenn ein Schalter diesen Pfad nicht unterbrochen hat (E30'), oder in einem zweiten Zustand, wenn ein Schalter diesen Pfad unterbrochen hat (E30).

2. Verfahren zur Ermittlung einer Funktionsstörung in einer durch eine Steuerleitung gesteuerten Anlage nach Anspruch 1, **dadurch gekennzeichnet, dass** es aufgrund einer Zwischenanzeige, die von der Steuereinheit (213, 213') gespeichert ist, beginnt.

3. Verfahren zur Ermittlung einer Funktionsstörung in einer durch eine Steuerleitung gesteuerten Anlage nach Anspruch 1, **dadurch gekennzeichnet, dass** es durch eine spezielle Aktivität eines Verbrauchers über die Mensch-Maschine-Interface (211, 211') beginnt.

4. Verfahren zur Ermittlung einer Funktionsstörung nach einem der vorhergehenden Ansprüche, **dadurch gekennzeichnet, dass** es einen Schritt (E40) zur Steuerung des ausgewählten Pfads im ersten Energieverbrauchsmodus aufweist, wenn der Schalter den Pfad unterbrochen hat (E30).

5. Energiesteuereinheit (2, 2') zur Durchführung eines Verfahrens zur Ermittlung einer Funktionsstörung in einer Anlage (1), die von einer Steuerleitung (31, 32, 33) gesteuert wird, aufweisend ein oder mehrere elektrische Geräte und/oder Gruppen elektrischer Geräte (41, 42, 43), die gemäß einem ersten Energieverbrauchsmodus entsprechend einem Amplitudensignal null oder gemäß einem zweiten Energieverbrauchsmodus entsprechend einem Vollwellensignal arbeiten sollen, und eine Energiesteuereinheit (2, 2'), die ebenso viele Pfade (Vᵢ) wie elektrische Geräte und/oder Gruppen elektrischer Geräte (41, 42, 43), von denen jeder Pfad (Vᵢ) an ein elektrisches Gerät oder eine Gruppe elektrischer Geräte (41, 42, 43) durch eine einzige Steuerleitung angeschlossen ist, sowie eine Mensch-Maschine-Interface mit ebenso vielen Pfadzustandsprüfeinrichtungen (216, 216'ᵢ) wie Pfaden (Vᵢ) aufweist, **gekennzeichnet durch** eine Steuereinheit (23, 23'), die zum Steuern jedes Pfads der Anlage im ersten Energieverbrauchsmodus oder im zweiten Energieverbrauchsmodus vorgesehen ist, wobei die Steuereinheit (23, 23') auch zum Steuern der Zustandsprüfeinrichtung jedes Pfads im ersten Zustand, wenn der Schalter den Pfad nicht unterbrochen hat, oder im zweiten Zustand, wenn der Schalter den Pfad unterbrochen hat, vorgesehen ist.

6. Energiesteuereinheit nach Anspruch 5, **gekennzeichnet durch** ein Programmschaltwerk, das die Mensch-Maschine-Interface (211, 211'), die Steuereinheit (213, 213'), sowie eine Durchführungseinheit (22, 22') aufweist, die eine Steuereinheit (223, 223'), einen oder mehrere Pfade (Vᵢ) und wenigstens einen Schalter (221, 221') umfasst, wobei das Programmschaltwerk und die Durchführungseinheit mit Hilfe eines bidirektionalen Kommunikationsbusses (B) kommunizieren.

7. Energiesteuereinheit (2, 2') nach Anspruch 5 oder 6, **dadurch gekennzeichnet, dass** sie mehr als einen Pfad und eine Pfadwähleinheit (224') aufweist.

8. Energiesteuereinheit (2, 2') nach einem der Ansprüche 5 bis 7, **gekennzeichnet durch** einen einzigen Schalter (221, 221'), der vor allen Pfaden der Energiesteuereinheit liegt.

9. Energiesteuereinheit (2, 2') nach einem der Ansprüche 5 bis 7, **dadurch gekennzeichnet, dass** jeder Pfad einen Schalter (221'ᵢ) aufweist.

10. Energiesteuereinheit (2, 2') nach Anspruch 8 oder 9, **dadurch gekennzeichnet, dass** jeder Schalter (221, 221', 221';) ein Schalter mit automatischer Rückstellung ist.
